# EUROPEAN PATENT APPLICATION

(11) **EP 3 124 301 A1**
(43) Date of publication of application: **01.02.2017**
(21) Application number: 16182082.4
(22) Date of filing: 29.07.2016
(51) Int. Cl.: B60J 7/08

(54) **VEHICULAR APPARATUS FOR TRANSPORTING BULK GOODS**

(30) Priority: 31.07.2015 GB 201513559
(71) Applicant: Uniroll (UK) Limited, Rochdale, Manchester OL16 3PS (GB)
(72) Inventor: ROGERSON, Alan Stephen, ELY, Cambridgeshire CB7 4SY (GB)
(74) Representative: Dummett Copp LLP

(57) **Abstract**

A vehicular apparatus (1) for transporting bulk goods comprises an elongate transport container (2) having an open top side (10). A sheeting cover (4) is movable over the open top. An extension mechanism (50) has a first actuator (52) that extends the cover by pulling on a cable linkage (51). A retraction mechanism (80) has a second actuator (80) that retracts the cover by rotating a central pole to wrap the cover around the pole. The first actuator (52) and a proximal portion (53) of the cable linkage (51) are beneath the floor (6) of the container (2) and a section of cable linkage (51') is routed vertically across the side wall (13) of the container. The first actuator (52) comprises at least one first quick-release mechanism (76) such that its piston is free to move under an externally applied force, and the second actuator (81) comprises a second quick-release mechanism (77) such that the centre pole is free to rotate under an externally applied force, whereby manual movement of said cover (4) is facilitated when said section (51') of cable linkage is manually pulled downwards.

## Description

### BACKGROUND

### a. Field of the Invention

This invention relates to a vehicular apparatus for transporting bulk goods having an open-topped transport container, particularly a container for road transport, with a sheeting cover that may be extended over the open top of the container to protect transported goods held by the container and that may be retracted to provide loading and/or unloading access to the container.

### b. Related Art

It is desirable, and indeed in many cases a legal requirement, to cover bulk goods which are being transported by road in a transport container which is loaded from above, so that none of the goods are scattered while the container is on the move. Examples of such transport containers include trailers, towed behind a tractor unit, and load containers mounted on a lorry chassis. Chassis mounted load containers are sometimes tipper containers that may be unloaded by tipping one end upwards, typically a forwards end, so that goods may be dumped out from a rear hatch of the transport container.

It is known from EP 1 232 889 to provide apparatus for removing and extending a cover (often referred to as sheeting or a sheeting cover) where motors are used to extend and to retract the cover. A central pole is attached to the cover and runs the length of the container. Rotation of this pole winds up the cover on both sides of the central pole, as the pole travels towards the fixed edge of the cover where the cover is retained when it is open.

Another type of apparatus for extending and retracting a sheeting cover for a goods transport container is disclosed in GB 2 410 926. This also discloses a sheeting cover having central pole that is attached to the cover and runs the length of the container, which is part of a tipper truck. One edge of the cover is fixed to a side edge of the container and a movable edge of the cover holds a hollow pole inside of which runs a cable. Both ends of the cable are fixed. One fixed end passes through a pulley having a set of fixed pulley rollers and a set of movable pulley rollers. The movable pulleys are on a carriage that is moved by a hydraulic piston. Both the piston and the pulley arrangement are mounted on an external surface of a longitudinal side wall of the container. The fixed end of the pulley is directly beneath a front edge of the sheeting cover so that the cable can pass directly upwards from the final fixed pulley roller up into an open end of the edge pole, which is also aligned with the front edge of the cover. This minimises the distance of the cable run across the container side wall, and also locates the cable in proximity with a farthest corner of the container, away from the rear dumping end of the tipper truck.

The cable then extends inside the pole to a rear end of the pole, aligned with a rear edge of the cover, beyond the rear end of the pole, the other end of the cable is fixed to a cable anchorage on the container body.

The central pole is rotated by a rotary hydraulic motor than runs on a track atop the front wall of the container. Both the hydraulic motor and the hydraulic piston are powered by a single hydraulic pump.

A number of problems have been noted in use with this apparatus. One problem is the need to minimise friction inside the pole, in order to minimise frictional losses and the required power of the hydraulic piston, and to reduce wear on the cable. Typically, at least the ends of the pipe have to be provided with smooth bearing surfaces, which reduces but does not eliminate these problems.

It is sometimes necessary to replace the cable, for example when this becomes worn, and it can sometimes be difficult to insert a new cable through the pole. Partly this is because the inside of the pole is provided with smooth bearing points at the pole ends where this enters and exits the channel through the pole. The bearing points relatively narrow. Although in principle a new cable can be pulled through the pole using the old cable, this is not possible if the cable has broken with the cable broken end ending up inside the pole.

A different problem arises if there is a failure of the rotary motor, the hydraulic piston or the hydraulic power source. In this case it may be necessary to extend or retract the cover manually. In principle, if the motor and piston are free to move then it may be possible to apply sufficient manual force to move the cover one way or the other. The hydraulic piston and rotary motor cannot however be disconnected from hydraulic lines to free up movement of the piston or motor without potentially spilling hydraulic fluid.

It is an object of the present invention to provide a more convenient vehicular apparatus for transporting bulk goods.

### SUMMARY OF THE INVENTION

According to a first aspect of the present invention, there is provided a vehicular apparatus for transporting bulk goods, comprising:
- an elongate transport container for holding said goods during transport, said container having a floor, a plurality of walls and a top side having an opening into which said goods may, in use, be loaded and/or unloaded, said walls including longitudinally extending opposite first and second side walls and transversely extending opposite front and back walls;
- a sheeting cover for said opening, said cover being movable in opposite first and second transverse directions between an extended orientation for restricting access to said opening and a retracted orientation for providing access to said opening, said cover having opposite first and second sides edges, the first side edge of said cover being fixed in place proximate said first side wall and the second side edge of said cover being provided with a cable duct;
- an extension mechanism for moving said cover in the second transverse direction from the retracted orientation to the extended orientation, the extension mechanism comprising a cable linkage and a first actuator for pulling the cable linkage, the cable linkage having a proximal portion being operatively connected to the first actuator and having a distal portion being anchored relative to said container and the cable linkage between said proximal and distal portions being linked to said cover by passing through the cable duct, the cable duct being configured to convey the cable linkage along the second side edge of said cover when the cable linkage is, in use, pulled by the first actuator whereby the second side edge of said cover is drawn towards the second side wall of said container thus moving said cover from the retracted orientation to the extended orientation;

- a retraction mechanism for moving said cover in the first transverse direction from the extended orientation to the retracted orientation, the retraction mechanism comprising a centre pole and a second actuator for rotating the centre pole about a central axis of the centre pole, the centre pole extending in a longitudinal direction and being fixed along a centreline of said cover, the centre pole being configured to wrap said cover around the centre pole when the centre pole is, in use, rotated by the second actuator whereby the second side edge of said cover is drawn towards the first side wall of the container thus moving said cover from the extended orientation to the retracted orientation;
wherein
- the cable duct includes a first duct portion and a second duct portion, the first duct portion extending from a central portion of the second side edge of said cover towards the front wall and the second duct portion extending from said central portion towards the back wall;
- the cable linkage has a first branch and a second branch, the first branch passing through the first duct portion from said central portion towards the front wall and the second branch passing through the second duct portion from said central portion towards the back wall; and
- the first actuator and the proximal portion of the cable linkage are beneath the floor of said container and the cable linkage includes between said proximal portion and said central portion a section of cable linkage that is routed substantially vertically across a longitudinally central portion of the second side wall.

In a preferred embodiment of the invention, the section of cable linkage is routed across an external surface of the second side wall so that this section is manually directly accessible.

According to a second aspect of the present invention, there is provided a vehicular apparatus for transporting bulk goods, comprising:
- an elongate transport container for holding said goods during transport, said container having a floor, a plurality of walls and a top side having an opening into which said goods may, in use, be loaded and/or unloaded, said walls including longitudinally extending opposite first and second side walls and transversely extending opposite front and back walls;
- a sheeting cover for said opening, said cover being movable in opposite first and second transverse directions between an extended orientation for restricting access to said opening and a retracted orientation for providing access to said opening, said cover having opposite first and second sides edges, the first side edge of said cover being fixed in place proximate said first side wall and the second side edge of said cover being provided with a cable duct;
- a first guide track extending transversely across said container atop either the front wall or the back wall;
- an extension mechanism for moving said cover in the second transverse direction from the retracted orientation to the extended orientation, the extension mechanism comprising a cable linkage and a first actuator for pulling the cable linkage, the cable linkage having a proximal portion being operatively connected to the first actuator and having a distal portion being anchored relative to said container and the cable linkage between said proximal and distal portions being linked to said cover by passing through the cable duct, the cable duct being configured to convey the cable linkage along the second side edge of said cover when the cable linkage is, in use, pulled by the first actuator whereby the second side edge of said cover is drawn towards the second side wall of said container thus moving said cover from the retracted orientation to the extended orientation;
- a retraction mechanism for moving said cover in the first transverse direction from the extended orientation to the retracted orientation, the retraction mechanism comprising a centre pole and a second actuator for rotating the centre pole about a central axis of the centre pole, the centre pole extending in a longitudinal direction between opposite first and second ends of said pole and being fixed along a centreline of said cover, and the second actuator having a rotary drive output connected to one of said ends so that the centre pole wraps said cover around the centre pole when the centre pole is, in use, rotated by the rotary drive output of the second actuator, the arrangement of the centre pole, the second actuator and the first guide track being such that the second actuator runs along the first guide track as the centre pole is rotated, whereby the second side edge of said cover is drawn towards the first side wall of said container thus moving said cover from the extended orientation to the retracted orientation; wherein
- the first actuator and the proximal portion of the cable linkage are beneath the floor of said container and the cable linkage includes a section of cable linkage between said proximal portion and the second side edge of said cover, said section of cable linkage being routed substantially vertically across a portion of the second side wall; and
- the first actuator comprises an air-driven piston with at least one first quick-release mechanism for disconnecting said piston from a corresponding air-supply line such that said piston is free to move under an externally applied force, and the second actuator comprises a second quick-release mechanism for disconnecting the rotary drive output from said end of the centre pole such that the centre pole is free to rotate under an externally applied force, whereby said cover may, in use, be manually moved from the retracted orientation to the extended orientation by first using said first and second quick-release mechanisms to free, respectively, the movement of said piston and the centre pole, whereby movement of said cover (4) from the retracted orientation to the extended orientation is facilitated when said section (51') of cable linkage is manually pulled downwards to draw the second side edge (22) of said cover towards the second side wall (13) of said container.

Branching the cable linkage into two portions, each of which is linked to separate forwards and rearwards duct portions, provides a number of benefits. The tension or force carried by each branch of the linkage is halved as compared with the force that would be carried by a single cable linkage linked to a single duct extending fully along the second side edge of the sheeting cover. This results in a similar reduction in the force exerted by the linkage on points of contact with the duct as the cable linkage passes through the duct when the sheeting cover is moved from retracted to extended orientations. Total frictional losses may therefore be reduced, which permits a reduction in the size and weight of the first actuator. In addition it may make it easier for a person to exert enough force on the cable linkage if it is ever necessary to manually pull on the cable linkage to assist movement of the sheeting cover to the extended orientation.

The reduced forces on the branch portions of the cable linkage also permit a reduction in the strength or gauge of the materials used in these portions, with the result that the inner size or inner diameter of the duct portions can also be reduced. This allows a potential weight reduction of these components.

There is a particular advantage when a section of cable linkage is vertically routed in a substantially central portion of the second wall. This part of the second wall will normally be more protected from bumps or scrapes than, for example, portions of the side wall closer to corners with the front and back walls of the container.

Dividing the duct into a first duct portion and a second duct portion around a central portion of the sheeting cover second edge also provides a number of benefits. For example, this makes it possible to substantially balance the forces applied to the front and rear sections of the sheeting cover along the second edge so that this edge of the cover is not twisted or pulled unevenly by the cable linkage when moved to the extended orientation. This also helps to avoid uneven stretching or the imprint of creases in the sheeting cover, which therefore will roll up more evenly on the centre pole when moved to the retracted orientation.

The cable linage may comprise any type of cable, non-exclusive examples of which include: rope, wire rope, webbing and chain links.

Usually, the opening will extend fully to the longitudinal first and second sides and the transverse front and back sides of the container. There may, however, be a lip along one or more edges so that the opening is set back from the side or front and back walls. In addition, there may be bracing features extending between opposite or adjacent back walls and therefore truncating or subdividing the opening. The opening may therefore be any type of opening for providing access to the interior volume of the container.

Usually, the first side edge of the sheeting cover will be fixed to a longitudinal edge of the container. The first side edge may, however, be fixed to other location on the container as long as the sheeting cover still serves to restrict access to the opening when the cover is extended.

The first and second branches of the cable linkage are preferably completely separate from each other with no overlap except where these connect to the part of the cable linkage extending towards the first actuator. Similarly the first and second duct portions are preferably completely separate from each other with no overlap and with the central portion of the second edge of the sheeting cover being between the first and second duct portions.

The duct portions may, however, be provided by a single edge pole having an axially extending central bore, which has two separate portions that act as a first and second duct portions for passage of the first and second branches of the cable linkage. A central portion of an outer wall of the edge pole then has an aperture extending into the bore with the first and second duct portions leading in opposite longitudinal directions from the substantially central aperture in the edge pole outer wall.

The ends of the edge pole may run on tracks beneath opposite front and back ends of the sheeting cover. The guide tracks may be part of the container and may be conveniently provided atop the container front and back walls.

A free end of the centre pole may also, in use, run along one of the guide tracks as the sheeting cover is extended and retracted over said opening. The opposite, driven end of the centre pole may be indirectly supported on the opposite guide track, for example by the second actuator, also referred to herein as a cover retraction motor, which may run directly on this guide track.

As known in the prior art, to prevent rotation of the second actuator when the second actuator is used to roll up the material of the sheeting cover, the actuator may be provided with an arm that extends to one side of the axis of the centre pole. Such an arm is called a "torque arm".

Therefore, the apparatus may further comprise a second guide track, the first guide track extending transversely across said container atop the front wall and the second guide track extending transversely across said container atop the back wall, wherein the rotary drive output is connected to the first end of the centre pole and the first end of the centre pole is supported by the first guide track and the second end of the centre pole is supported by the second guide track.

The second side wall of the container has a series of vertically extending reinforcing ribs on an outer surface thereof, and the above-mentioned section of cable linkage is routed substantially vertically across a longitudinally central portion of the second side wall between an adjacent pair of the ribs.

In a preferred embodiment of the invention, the pair of ribs extends from the second side wall to beneath the floor, and the cable linkage is routed between the pair of ribs from the second side wall to beneath the floor.

The vertically routed section of cable linkage is preferably manually accessible across substantially all of this section whereby this section may, in use, be manually pulled to assist if necessary the extension mechanism to move the second side edge of the sheeting cover towards the second side wall of the container.

In a preferred embodiment of the invention, the first actuator comprises a piston cylinder configured to drive an actuating rod and a pulley system. The pulley system is connected to the cable linkage and multiplies the movement of the rod, for example by between 2 and 5 times, so that the rod does not have to move as far as the second edge of the sheeting cover as this moves between the opposite sides edges of the container top or the opening in the top.

The pulley system preferably comprises a pulley housing and inside the pulley housing a plurality of fixed pulleys and a pulley carriage. The pulley carriage supports a plurality of movable pulleys. The piston rod is configured to move the pulley carriage.

The movement of the pulley carriage is most preferably guided by sliding contact between the pulley carriage at least one inner surface of the pulley housing.

To provide increased physical protection, the pulley housing is preferably mounted to an underside of the floor. For the same reason, it is particularly preferred if both the piston cylinder and the pulley housing are mounted to the underside of the floor. The piston cylinder, the actuating rod and the pulley system can then be linearly arranged beneath the floor substantially along a longitudinal centre line of the container.

It should be noted that there is no need to use the second actuator when extending the sheeting cover as the centre pole can be allowed to rotate freely as the second edge of the sheeting cover is pulled towards the first side edge of the transport container.

In a preferred embodiment of the invention, the first actuator is an air cylinder and the second actuator is an electrically powered hydraulic motor, which may be a combined unit having an electric motor that pressurises a hydraulic fluid for a rotary hydraulic drive having a rotary drive output shaft. The air cylinder is then driven by an air supply which can be the air brake supply for the vehicle. The electric power for the electric motor generating the hydraulic pressure can be the vehicle battery supply, which will most commonly be a 24 volt supply.

The apparatus may further comprise a hand-crank, the hand-crank being configured to engage with the end of the centre pole once disengaged from the second actuator, such that the centre pole may, in use, be manually rotated by the hand-crank. In this way, the sheeting cover may, in use, be manually moved from the extended orientation to the retracted orientation by first using both of the first and second quick-release mechanisms to free the movement of the first actuator piston and also free the centre pole. The crank can then be used to manually rotate the centre pole and retract the second side edge of the sheeting cover.

A single closure rope preferably runs from a fixed point at one end of the vehicle, through the edge pole from one end thereof to the other, and to an accumulator provided with a hydraulic ram so that when the ram is retracted, the rope is pulled to draw the edge pole to the edge of the vehicle.

It will be understood that the term 'rope' includes any flexible traction member and thus the term 'rope' encompasses a wire, strap, cable, chain or the like.

The edge pole preferably has a bush at each end which allows the rope to be drawn freely through the edge pole. The bushes can be ceramic bushes, secured in the ends of the edge pole.

The accumulator can comprise a rope path having two fixed sheaves and two movable sheaves, with the movable sheaves being mounted together on the end of the ram so that they can move towards or away from the fixed sheaves.

The single hydraulic pump can be conveniently mounted on a side of the vehicle, with the direction of the ram extension being along the side of the vehicle.

Radius arms can be fitted at each end of the container, one end of each arm being mounted on a pivot axis lying substantially on the longitudinal centre line of the container, and the other end of each arm being attached to the edge pole such that the edge pole is constrained to move in an arc centred on the pivot axis, above the guide tracks.

The, or each, guide track will normally be convex.

A remote control unit can be used to control the first and second actuators.

A quick-release fastening can be provided between the centre pole and the cover retraction motor to allow the two to be separated for servicing, and the cover retraction motor and the torque arm can form a single unit position on a guide track.

### BRIEF DESCRIPTION OF THE DRAWINGS

The invention will now be further described, by way of example, with reference to the accompanying drawings, in which:
Figure 1 is a side view of a vehicular apparatus for transporting bulk goods with a container with a retractable sheeting cover according to a preferred embodiment of the invention;
Figure 2 is a perspective end view of the container of Figure 1, showing how the cover extends across a top side of the container and how one edge of the cover is provided with an edge pole having a duct with an opening in a central portion of the edge of the cover for a cable linkage that extends vertically from the between top and bottom sides of the container;
Figure 3 is a plan view of the bottom side of the container, showing how a first actuator for pulling the cable linkage is provided along a longitudinal central line of the container;
Figure 4 is a schematic representation of the first actuator view showing how the first actuator comprises a piston cylinder configured to drive an actuating rod and a pulley system to which the cable linkage is connected;
Figure 5 is a perspective end view from above, showing how a longitudinally central portion of the sheeting cover is joined to a centre pole that is rotated by a second actuator to wrap the cover around the centre pole and thereby pull the cover away from the cable linkage and towards a fixed side edge of the cover;
Figure 6 is a schematic cross section along a vertically central plane of the second actuator, showing how this is joined to a quick-release mechanism for releasing a rotary drive shaft from an end of the centre pole; and
Figure 7 is an exploded view of the quick-release mechanism of Figure 6.

### DETAILED DESCRIPTION

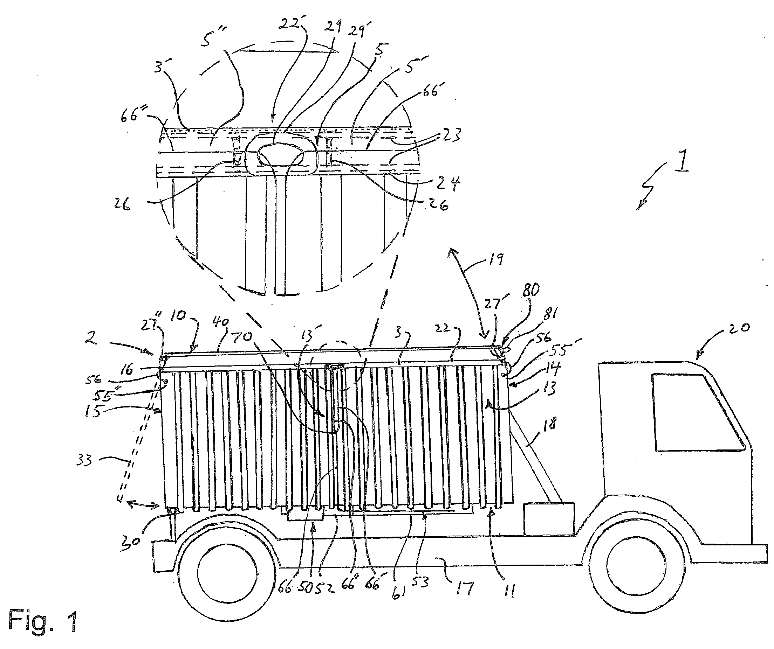

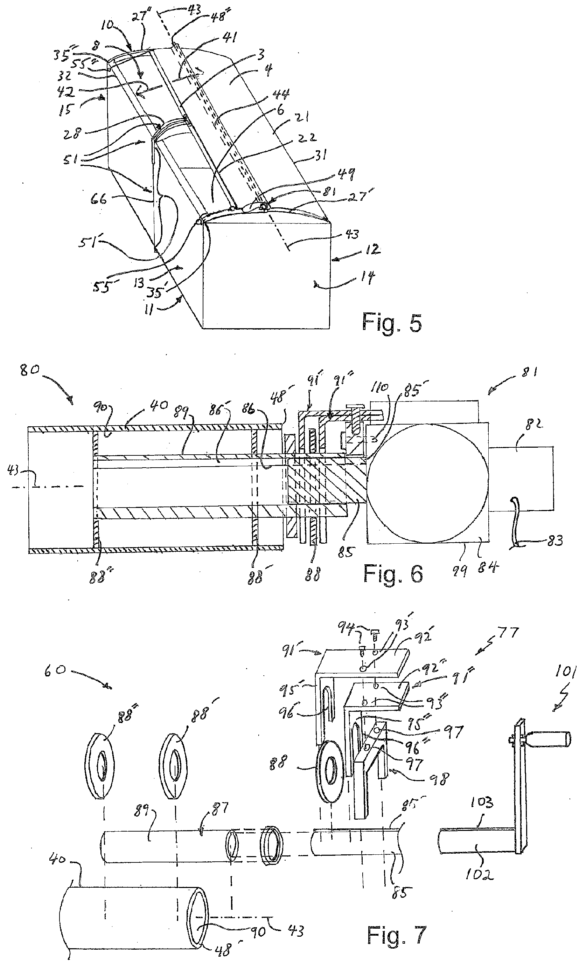

Figures 1, 2, 3 and 5 show a vehicular apparatus 1 for transporting bulk goods, for example agricultural produce such as potatoes, onions, etc. (not shown). In this example the vehicular apparatus is a tipper truck having an elongate container 2 with a transversely retractable sheeting cover 4. As shown in Figure 5, the container 2 has an uppermost or top side 10 that provides an opening 8 which may be covered over by the sheeting cover 4. A bottom side 11 of the container provides a floor 6 on which bulk goods may be deposited. The container top side 10 is bounded by first and second longitudinal side walls 12, 13, and transverse front and back walls 14, 15 that extend between the side walls. In this example, the first side wall 12 is on a left hand side of the container and the second side wall 13 is on the right hand side of the trailer. It should however, be noted that the illustrated arrangement of features may be reversed with respect to either a longitudinal axis 7 or transverse axis 9 of the container 2.

The left and right side walls and front and back walls extend vertically between the container top and bottom sides. The sides or walls may, however, be angled with respect to vertical. The rear side 15 of the container is provided with a hinge 16 so that a main panel 33 of the rear side may swing outwards when bulk goods are to be tipped out of the container 2.

The cover 4 has opposite first and second side edges 21, 22, which are in this example left and right side edges, although the arrangement may be reversed, as mentioned above. The first side edge 21 of the cover is fixed in place proximate the first side wall 12 and the second side edge 22 of the cover is provided with a cable duct 5. A central portion 22' of the sheeting cover second side edge is shown enlarged in Figure 1. The duct is provided by a bore 23 inside an edge pole 24 that is secured to the second side edge of the cover, for example, by forming a sleeve 3 in the second edge 22 of the cover and fitting the edge pole inside the sleeve. In this example, the sleeve 3 is formed by folding the material of the sheeting cover back around the edge pole and securing the material to itself, for example by stitching and/or gluing as indicated in the magnified section of Figure 1 by a line of dots 3'.

The sheeting cover 4 is shown partially retracted in Figure 5. Although not illustrated, with the sheeting cover fully retracted to reveal the opening 8, bulk goods may be deposited through the opening, for example by a conveyor, a front end loader or any other type of goods loading machinery. Deposited goods are then held within the container internal above the floor 6 and contained within the internal volume of the container defined by the container left and right longitudinal side walls 12, 13, and transverse front and back walls 14, 15.

The tipper truck 100 has a tractor unit 20 that pulls a chassis 17 on which the container 2 is supported. An elevating ram 18 may be activated to raise and lower the container, as shown schematically by arrow 19, as the container pivots about a lower rear pivot 30 fixed to the chassis 17. It should be noted that the invention is applicable to different types of open-topped transport container, for example non-tipping containers and also to container which are part of a trailer unit, rather than a rigid chassis truck.

The opening 8 can be closed by the sheeting cover 4. In Figure 5, the cover 4 is shown just partly opened. The sheeting cover 4 is a flexible web-type material. In most cases it will be a waterproof sheet, but it could also be a net or mesh of some sort. It is therefore not necessary that the sheeting cover provides a complete cover over the opening.

The open top 10 of the container 2 is supported by and is moved between extended and retracted orientations along front and rear guide tracks 27', 27" which extend transversely atop opposite front and rear ends of the container. In this embodiment, there is also a central guide track 28 that provides transverse support to a central portion 4' of the sheeting cover. The guide tracks are curved so that when the sheeting cover 4 is in place it sheds water. On containers of shorter length the central guide track 28 may be omitted.

The cover 4 has one edge, which in this example is the first edge 21, permanently secured to a first longitudinal edge 31 of the container, which in this example is the left hand longitudinal top edge between the top side 10 and first longitudinal side 12 of the container. The second cover edge 22 is free to move in a first transverse direction 41 towards a first longitudinal edge 31 of the container and into a retracted configuration. The second cover edge 22, opposite to the first edge, is also free to move in a second transverse direction 42 towards a second longitudinal edge 32 of the container and into an extended configuration.

The vehicular apparatus comprises an extension mechanism 50 for moving the cover 4 in the second transverse direction 42 towards the second longitudinal container edge 32. The vehicular apparatus also comprises a retraction mechanism 80 for moving the cover in the first transverse direction 41 towards the first longitudinal container edge 31.

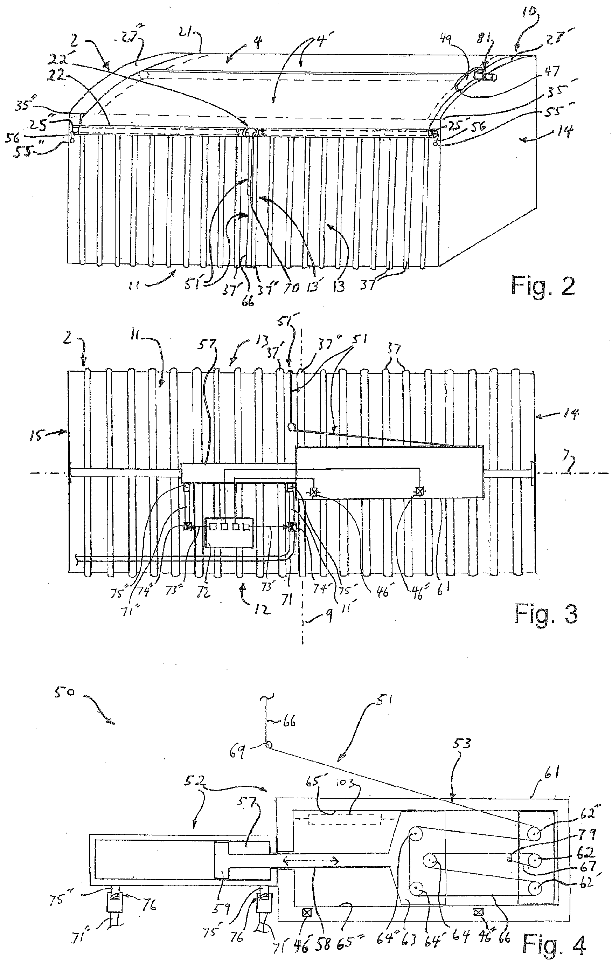

Details of the extension mechanism 50 are shown in Figure 4 and details of the retraction mechanism 80 are shown in Figures 6 and 7.

The extension mechanism 50 comprises a cable linkage 51 and a first actuator 52 for pulling the cable linkage. The cable linkage has a proximal portion 53 provided by a rope 66 that is operatively connected to the first actuator 52. The cable linkage also has a distal portion 56 that is branched with first and second rope branches 66', 66" each of which is fixed at its distal end 56', 56" to respective first and second anchors 55', 55" on the container. The first anchor is proximate a first vertex 35' defined by the second longitudinal side wall 13, the front wall 14 and top side 10 of the container, and the second anchor 55" is proximate a second vertex 35" defined by the second longitudinal side wall 13, the back wall 15 and the top side 10 of the container.

The first rope branch 66' passes through a forwards half 5' of the duct from a duct central aperture 29 in the pole towards a forwards end 25' of the edge pole 24. The second rope branch 66" passes through a rearwards half 5' of the duct from the aperture 29 towards a rearwards end 25" of the edge pole 24. Inside the duct, the cable linkage 51 passes through the edge pole 24, being guided through a series of low-friction ceramic bushes 26 spaced apart along the length of the bore 5. The locations of two of these bushes are shown in dotted outline in the magnified portion of Figure 1.

The duct central aperture 29 is aligned within a sheeting aperture 29' in the sleeve 3 of sheeting material folded around the edge pole 29'.

The cable linkage 51 between the proximal potion 53 and distal portion 56 is therefore linked to the sheeting cover 4 by passing through the cable duct 5, 5', 5" in the edge pole 24. The aperture 29 is midway along the length of the edge pole 24 into which the cable linkage passes. The cable duct is configured to convey the cable linkage 51 along the second side edge 22 of the cover when the cable linkage is, in use, pulled by the first actuator 52 whereby the second side edge of the cover is drawn towards 42 the second side wall 13 of the container 2 thus moving the cover 4 from the retracted orientation to the extended orientation.

The first actuator 52 comprises a piston cylinder 57 configured to drive an actuating rod 58 and a pulley system 60. The pulley system comprising a pulley housing 61 and inside the pulley housing two fixed pulley wheels or rollers 62', 62" and a pulley carriage 63. The pulley carriage supports three movable pulley wheels or rollers 64, 64', 64". The piston rod 58 is configured to move the pulley carriage 63. The pulley carriage has a square or rectangular cross-section and movement of the pulley carriage is guided by sliding contact between the pulley carriage at four correspondingly square or rectangular profile inner surfaces of the pulley housing, two of which 65', 65" are indicated in the schematic representation of Figure 4.

Both the first actuator 50 and the pulley housing 61 are mounted on the container bottom side 11.

The proximal portion 53 of the cable linkage 51 is provided by the rope 66, a proximal end 67 of which is fixed to an anchor 79. The anchored end 67 of the rope passes around a non-rotating fixed roller 62 that is positioned midway between the two rotatable fixed pulley rollers 62', 62". Inside the pulley housing 61, the rope 66 extends from the non-rotating roller 62 towards the pulley carriage 63 where the rope wraps substantially 180° around a central movable roller 64. The rope then extends to a first one 62' of the two fixed pulley rollers around which the rope wraps substantially 180° before extending back towards the pulley carriage where the rope wraps substantially 90° around one 64' of the other two movable pulley rollers. The rope then extends to the third one 64" of the movable pulley rollers around which the rope wraps substantially 90°. The rope then extends to the final one of the two fixed pulley rollers 62" around which the rope wraps substantially 180°, before exiting through a side aperture 68 in the housing. The pulley system 60 magnifies the movement of rod 58 and carriage 63 by four times, with a corresponding four times reduction in rope tension as compared with the force applied by the rod 58.

The rope 66 then passes around a fixed roller 69 which directs the cable linkage transversely towards a central portion 13' of the container second side wall 13. The container is provided with a series of parallel external reinforcing ribs 37 that extend in a vertical direction across both side walls 12, 13 and in a transverse direction across the bottom of the bottom wall 11. A section of cable linkage 51' is routed between an adjacent centrally located pair 37', 37" of the ribs on the second side wall 13, from the container bottom wall 11 upwards towards the longitudinal top edge 32 of the second side wall. For the sake of clarity only, the ribs are omitted from the view of Figure 5. This section of cable linkage 51' is routed substantially vertically across the longitudinally central portion 13' of the second side wall 13. This central portion need not be on the exact transverse axis 9 of the container but is preferably within a central 10% of the longitudinal length of the container second side wall, and most preferably within a central 5%. The reason for this is so that the rope is conveniently positioned to enter a similarly located central portion of the duct 5 and so that the sheeting cover 4 is not significantly pulled in a longitudinal direction by the first actuator 52, owing to any imbalance of forces where the rope portions 66', 66" enter the edge pole.

When the cover is in the extended orientation, for example as shown in Figure 1, a join or junction 70 in the cable linkage 51 between the rope 66 and the two first and second rope branches 66', 66" is located on the central portion 13' of container second wall 13.

The piston cylinder 57 houses an air piston 59, one side of which is powered by a first air line 71' connected to the piston cylinder 57. Pressurised air is provided by a main air supply line 71, which may be conveniently part of an air brake system (not shown). A second air line 71" connected to the piston cylinder 57 passively admits and releases air from the other side of the air piston 59.

A controller unit 72 includes two outputs 73', 73" linked to first and second solenoid valves 74', 74" connected respectively to the first and second air lines 71', 71 ", for controlling the inlet and outlet of air from corresponding inlet and outlet ports 75', 75" on the piston cylinder 57 as the air piston moves. Each solenoid valve may be opened to connect the first and second air lines 71', 71" to ambient air pressure. The first solenoid valve 74' is connected also to the main air supply line 71. When the piston cylinder is used to pull the rod 58 and the pulley carriage 63, the first solenoid valve 74' connects the main air supply line to the first air line 71' and the second solenoid 74" valve is opened to connect the second air line 71" to the ambient air. Driven by pressurised air, the air piston 59 pulls the rod 58 into the piston cylinder 57 thereby pulling the carriage 63 and tensioning the cable linkage 51. The first and second rope branches 66', 66" of the linkage are then pulled through the ducts as the sheeting cover 4 moves into the extended orientation.

As shown in Figure 4, the piston cylinder ports 75', 75" are each connected to the corresponding air line 71', 71" by means of a first quick-release mechanism 76, which in this example is a conventional bayonet fitting. By disconnecting the piston cylinder ports from the corresponding air lines, the air piston becomes free to move, which is necessary if the sheeting cover is to be manually extended or retracted.

As shown in Figures 3 and 4, first and second position sensors 46', 46" are mounted on the pulley housing 61. These position sensors are each connected to the controller unit 72, which is configured to monitor the position of the pulley carriage 63 when the air piston is in use. The solenoids are therefore opened and closed at the appropriate times in order to position and hold the pulley carriage in locations corresponding with the extended and retracted orientations.

The retraction mechanism 80 comprises a centre pole 40 and a second actuator 81 for rotating the centre pole about a central axis 43 of the centre pole. The centre pole extends in a longitudinal direction between opposite front and rear ends 48', 48" of the pole in a longitudinal direction and is fixed along a centreline 44 of the sheeting cover. The centre pole 40 is configured to wrap the cover around the centre pole when the centre pole is, in use, rotated around its axis by the second actuator 81. The second actuator 81 is fixed on a torque arm 49, and this presses against the front guide track 27' to provide a reaction surface against which the actuator can work in rotating the pole 40. As the centre pole 40 rotates, the material of the cover 4 is wound onto it from both sides, and the centre pole travels towards the first edge 21. The torque arm 49 has a contact surface 47 that slides along the front guide track 27' as this happens.

In this way, the second side edge 22 of the cover is drawn towards 41 the first side wall 12 of the container thus moving the cover from the extended orientation to the retracted orientation.

Details of the second actuator 81, and its connection to the centre pole 40, are illustrated in Figures 6 and 7. The second actuator 81 comprises an electric motor 82 powered from a 24 VDC line 83, which may conveniently be connected to a vehicle battery (not shown). The electric motor drives a self contained hydraulic motor 84 having a rotary drive output, which in this example is a rotary output shaft 85. The shaft is cylindrical with an axially projecting ridge that provides a key 85' that engages inside a matching groove 86' in a cylindrically inner surface 86 of an adapter rod 87. A pair of axially spaced washers 88', 88" is welded around a cylindrically outer surface 89 of the adapter rod and to a cylindrical inside surface 90 of the centre pole 40. A third washer 88 is welded to the adapter rod 87 outer surface 89 where this projects axially away from the front end 48' of the centre pole 40.

The second actuator 81 is joined to the adapter rod 87 by means of a second quick-release mechanism 77. In this example, the second quick-release mechanism comprises a pair of inverted L-shaped brackets 91', 91" that engage with opposite axial sides of the third washer 88. Each bracket 91', 91" has a top arm 92', 92" with a pair of through holes 93', 93" which are in alignment with each other for receiving one pair of bolts 94. A second arm 95', 95" extends downwardly from each top arm and an inverted U-shaped slot 96', 96" is provided in each second arm. The arms are placed on opposite axial sides of the third washer with the adapter rod passing through the U-shaped slots. The pair of bolts then passes through the two pairs of through holes to engage with a pair of threaded bores 97 in a mounting bracket 98 that is permanently fixed to an external housing 99 of the hydraulic motor 84, for example by means of bolts 110. The second actuator may then be rapidly connected and disconnected by engaging or disengaging the pair of L-shaped brackets 91', 91" with the adapter rod 87 either before or after axial engagement of the keyed motor output shaft with the slotted interior of the adapter rod.

Once disconnected, a hand crank 101 having a matching cylindrical shaft 102 and key 103 may be inserted into the adapter rod and turned by hand in order to manually move the sheeting cover towards the retracted position. Prior to doing this, the solenoid valves 74', 74" in the first actuator are disconnected from the first and second air ports 75', 75" to free up the movement of the air piston 59 and rod 58.

Similarly, when the sheeting cover 4 is to be manually extended, the quick-release mechanisms 76, 77 for the first and second actuators 52, 81 are each used to free up, respectively, the linear movement of the air piston, and hence cable linkage 51, and the rotational movement of the centre pole 40. In the case of the centre pole, this entails disconnecting both of the inverted L-shaped brackets 91', 91" from either side of the third washer 88, and then pulling the hydraulic motor output shaft 85 out from the interior of the adapter rod 87. A person may then pull downwardly on the section 51' of the cable linkage 51 extending vertically down the central portion 13' of the container second wall 13. Optionally, as indicated in Figure 4 by schematic dashes, the pulley housing may comprise a cable tensioning mechanism 105, for example a spring, so that slack in the cable linkage 51 is automatically reeled in by the pulley system 60.

The embodiment described above provides a number of advantages over the prior art. Friction from the cable linkage inside the edge pole is minimised by splitting the linkage into two branches. The tension in each rope branch is half that of a single rope. Therefore, the material forming each branch, for example a nylon rope, will press with half the force on bearing points, for example where the rope enters and leaves the duct. Although the number of bearing points is doubled, the rope itself will deform less and wear more slowly, and so smooth operation will be maintained for a longer period of time. The required power of the actuating piston can therefore be reduced.

The service life of the cable linkage where this passes through the duct is therefore also increased. If it does become necessary to renew the cable linkage, the length of a duct portion through which the linkage must be threaded is halved, which simplifies and speeds up the process.

If it is necessary to extend or retract the cover manually, the first and second actuators 52, 81 can be quickly and conveniently disconnected from, respectively, the cable linkage 51 and the centre pole 40. The use of an air piston 57 eliminates the possibility of spilling hydraulic fluid when venting one side of the cylinder to permit free movement of the cylinder piston.

Finally, the first actuator 52 and associated pulley system 60 are both mounted on the underside 11 of the container and are therefore relatively protected from accidental damage. The cable linkage 51 is also routed in a central portion 13' of one side of the container 2 which is a relatively protected location, particularly when flanked by a pair of vertically extending ribs 37', 37" on an external surface of the container. A user can also more easily pull downwardly on this exposed portion 51' of cable linkage if it is necessary to manually extend the sheeting cover.

In comparison with known systems for extending and retracting sheeting covers over a container for transporting bulk goods, the arrangement described above saves weight, provides a compact installation and allows simple servicing of the components and manual extension or retraction of the sheeting cover.

## Claims

1. A vehicular apparatus (1) for transporting bulk goods, comprising:
- an elongate transport container (2) for holding said goods during transport, said container having a floor (6), a plurality of walls (12, 13, 14, 15) and a top side (10) having an opening (8) into which said goods may, in use, be loaded and/or unloaded, said walls including longitudinally extending opposite first and second side walls (12, 13) and transversely extending opposite front and back walls (14, 15);
- a sheeting cover (4) for said opening (8), said cover being movable in opposite first and second transverse directions (41, 42) between an extended orientation for restricting access to said opening and a retracted orientation for providing access to said opening, said cover (4) having opposite first and second sides edges (21, 22), the first side edge (21) of said cover being fixed in place proximate said first side wall (12) and the second side edge (22) of said cover being provided with a cable duct (5);
- an extension mechanism (50) for moving said cover (4) in the second transverse direction (42) from the retracted orientation to the extended orientation, the extension mechanism comprising a cable linkage (51) and a first actuator (52) for pulling the cable linkage, the cable linkage having a proximal portion (53) being operatively connected to the first actuator and having a distal portion (56) being anchored (55', 55") relative to said container (2) and the cable linkage between said proximal and distal portions (53, 56) being linked to said cover (4) by passing through the cable duct (5), the cable duct being configured to convey the cable linkage along the second side edge (22) of said cover when the cable linkage is, in use, pulled by the first actuator (52) whereby the second side edge (22) of said cover is drawn towards the second side wall (13) of said container thus moving said cover (4) from the retracted orientation to the extended orientation;
- a retraction mechanism for moving said cover (4) in the first transverse direction (41) from the extended orientation to the retracted orientation, the retraction mechanism comprising a centre pole (40) and a second actuator (81) for rotating the centre pole about a central axis (43) of the centre pole, the centre pole extending in a longitudinal direction and being fixed along a centreline (44) of said cover, the centre pole being configured to wrap said cover (4) around the centre pole when the centre pole is, in use, rotated by the second actuator (81) whereby the second side edge (22) of said cover is drawn towards the first side wall (12) of said container (2) thus moving said cover (4) from the extended orientation to the retracted orientation;
wherein
- the cable duct (5) includes a first duct portion (5') and a second duct portion (5"), the first duct portion extending from a central portion (22') of the second side edge (22) of said cover (4) towards the front wall (14) and the second duct portion extending from said central portion towards the back wall (15);
- the cable linkage (51) has a first branch (66') and a second branch (66"), the first branch passing through the first duct portion (5') from said central portion (22') towards the front wall (14) and the second branch passing through the second duct portion (5") from said central portion towards the back wall (15); and
- the first actuator (52) and the proximal portion (53) of the cable linkage (51) are beneath the floor (6) of said container (2) and the cable linkage includes between said proximal portion (53) and said central portion (22') a section of cable linkage (51') that is routed substantially vertically across a longitudinally central portion (13') of the second side wall (13).

2. A vehicular apparatus (1) as claimed in Claim 1, in which the second side wall (13) of said container (2) has a series of vertically extending reinforcing ribs (37) on an outer surface thereof, and said section of cable linkage (51') is routed substantially vertically across a longitudinally central portion (13') of the second side wall (13) between an adjacent pair of said ribs (37', 37").

3. A vehicular apparatus (1) as claimed in Claim 1 or Claim 2, in which said pair of ribs (37', 37") extends from the second side wall (13) to beneath the floor (6) of said container (2), and the cable linkage is routed between said pair of ribs from the second side wall (13) to beneath the floor (6).

4. A vehicular apparatus (1) as claimed in any preceding claim, in which said section of cable linkage (51') is manually accessible across substantially all of said section whereby said section may, in use, be manually pulled to assist if necessary the extension mechanism to move the second side edge (22) of said cover towards the second side wall (13) of said container (2).

5. A vehicular apparatus (1) as claimed in any preceding claim, in which the first actuator (52) comprises a piston cylinder (57) configured to drive an actuating rod (58) and a pulley system (60), the pulley system comprising a pulley housing (61) and inside the pulley housing a plurality of fixed pulleys (62, 62', 62") and a pulley carriage (63), the pulley carriage supporting a plurality of movable pulleys (64, 64', 64") and the actuating rod being configured to move the pulley carriage and the movement of the pulley carriage being guided by sliding contact between the pulley carriage (63) at least one inner surface (65', 65") of the pulley housing (61).

6. A vehicular apparatus (1) as claimed in Claim 5, in which the pulley housing (61) is mounted to an underside (11) of the floor (6).

7. A vehicular apparatus (1) as claimed in Claim 6, in which the piston cylinder (57) is mounted to the underside (11) of the floor (6), the piston cylinder, the actuating rod (58) and the pulley system (60) being linearly arranged beneath the floor substantially along a longitudinal centre line (7) of said container (2).

8. A vehicular apparatus (1) for transporting bulk goods, comprising:
- an elongate transport container (2) for holding said goods during transport, said container having a floor (6), a plurality of walls (12, 13, 14, 15) and a top side (10) having an opening (8) into which said goods may, in use, be loaded and/or unloaded, said walls including longitudinally extending opposite first and second side walls (12, 13) and transversely extending opposite front and back walls (14, 15);
- a sheeting cover (4) for said opening (8), said cover being movable in opposite first and second transverse directions (41, 42) between an extended orientation for restricting access to said opening and a retracted orientation for providing access to said opening, said cover (4) having opposite first and second sides edges (21, 22), the first side edge (21) of said cover being fixed in place proximate said first side wall (12) and the second side edge (22) of said cover being provided with a cable duct (5);
- a first guide track (27') extending transversely across said container atop either the front wall (14) or the back wall (15);
- an extension mechanism (50) for moving said cover (4) in the second transverse direction (42) from the retracted orientation to the extended orientation, the extension mechanism comprising a cable linkage (51) and a first actuator (52) for pulling the cable linkage, the cable linkage having a proximal portion (53) being operatively connected to the first actuator and having a distal portion (56) being anchored (55', 55") relative to said container and the cable linkage between said proximal and distal portions being linked to said cover (4) by passing through the cable duct (5), the cable duct being configured to convey the cable linkage along the second side edge (22) of said cover when the cable linkage is, in use, pulled by the first actuator (52) whereby the second side edge (22) of said cover is drawn towards the second side wall (13) of said container (2) thus moving said cover (4) from the retracted orientation to the extended orientation;
- a retraction mechanism (80) for moving said cover (4) in the first transverse direction (41) from the extended orientation to the retracted orientation, the retraction mechanism comprising a centre pole (40) and a second actuator (81) for rotating the centre pole about a central axis (43) of the centre pole, the centre pole extending in a longitudinal direction between opposite first and second ends (48', 48") of said pole and being fixed along a centreline (44) of said cover (4), and the second actuator having a rotary drive output (85) connected to one of said ends so that the centre pole (40) wraps said cover around the centre pole when the centre pole is, in use, rotated by the rotary drive output of the second actuator, the arrangement of the centre pole, the second actuator and the first guide track being such that the second actuator runs along the first guide track (27') as the centre pole (40) is rotated, whereby the second side edge (22) of said cover is drawn towards the first side wall (12) of said container (2) thus moving said cover (4) from the extended orientation to the retracted orientation;
wherein
- the first actuator (52) and the proximal portion (53) of the cable linkage are beneath the floor (6) of said container (2) and the cable linkage includes a section of cable linkage (51') between said proximal portion and the second side edge (22) of said cover, said section of cable linkage being routed substantially vertically across a portion (13') of the second side wall (13); and
- the first actuator (52) comprises an air-driven piston (57) with at least one first quick-release mechanism (76) for disconnecting said piston from a corresponding air-supply line (71', 71") such that said piston is free to move under an externally applied force, and the second actuator (81) comprises a second quick-release mechanism (77) for disconnecting the rotary drive output (85) from said end (48') of the centre pole (40) such that the centre pole is free to rotate under an externally applied force, whereby said cover (4) may, in use, be manually moved from the retracted orientation to the extended orientation by first using said first and second quick-release mechanisms (76, 77) to free the movement of, respectively, said piston (57) and the centre pole (40),
whereby movement of said cover (4) from the retracted orientation to the extended orientation is facilitated when said section (51') of cable linkage is manually pulled downwards to draw the second side edge (22) of said cover towards the second side wall (13) of said container.

9. A vehicular apparatus (1) as claimed in Claim 8, in which:
- the cable duct (5) includes a first duct portion (5') and a second duct portion (5"), the first duct portion extending from a central portion (22') of the second side edge of said cover towards the front wall (14) and the second duct portion extending from said central portion towards the back wall (15);
- the cable linkage (51) has a first branch (66') and a second branch (66"), the first branch passing through the first duct portion (5') from said central portion (22') towards the front wall (14) and the second branch passing through the second duct portion (5") from said central portion towards the back wall (15); and
- the portion of the second side wall across which said section of cable linkage is routed is a longitudinally central portion (13') of the second side wall (13).

10. A vehicular apparatus (1) as claimed in Claim 8 or Claim 9, further comprising a second guide track (27"), the first guide track (27') extending transversely across said container atop the front wall (14) and the second guide track (27") extending transversely across said container atop the back wall (15), wherein the rotary drive output (85) is connected to the first end (48") of the centre pole (40) and the first end of the centre pole is supported by the first guide track and the second end (48") of the centre pole is supported by the second guide track.

11. A vehicular apparatus (1) as claimed in any one of Claims 8 to 10, further comprising a hand-crank (101), the hand-crank being configured to engage with one end (48') of the centre pole (40) once said pole is disengaged from the second actuator (81) such that the centre pole may, in use, be manually rotated by using the hand-crank, whereby said cover (4) may, in use, be manually moved from the extended orientation to the retracted orientation by first using both said first and second quick-release mechanisms (76, 77) to free the movement of, respectively, said piston and the centre pole and then by manually rotating the hand-crank to rotate the centre pole whereby the second side edge (22) of said cover is drawn towards the first side wall (12) of said container (2) thus moving said cover (4) from the extended orientation to the retracted orientation.
